# EUROPÄISCHE PATENTANMELDUNG

(11) **EP 4 403 802 A1**
(43) Veröffentlichungstag der Anmeldung: **24.07.2024**
(21) Anmeldenummer: 24151215.1
(22) Anmeldetag: 10.01.2024
(51) Int. Cl.: F16H 57/04

(54) **GETRIEBEEINHEIT FÜR EIN KRAFTFAHRZEUG UND ÖLBEHÄLTER ZUR BEVORRATUNG UND VERTEILUNG VON ÖL IN EINER SOLCHEN GETRIEBEEINHEIT**

(30) Priorität: 18.01.2023 DE 102023200384
(71) Anmelder: VOLKSWAGEN AG, 38440 Wolfsburg (DE)
(72) Erfinder: Stelzer, Christoph, 38471 Rühen (DE); Nennstiel, Lukas, 34117 Kassel (DE); Schröder, Thomas, 12307 Berlin (DE); Müller, Frank, 38165 Essenrode (DE); Sinner, Gabriele, 38442 Wolfsburg (DE)

(57) **Zusammenfassung**

Getriebeeinheit (10) für ein Kraftfahrzeug, umfassend
- ein Eingangsrad (11), ein mit dem Eingangsrad (11) kämmendes Zwischenrad (12) und ein mit dem Zwischenrad (12) kämmendes Ausgangsrad (13) sowie
- einen Ölbehälter (20) zur Bevorratung und Verteilung von Öl, der einen im Betriebszustand wenigstens bereichsweise oberhalb des Eingangsrades (11) angeordneten Hauptbehälter (21) aufweist.

Die Erfindung zeichnet sich dadurch aus, dass ein ringscheibenförmiges Abschirmelement (24), dessen Ringscheibe sich parallel und axial benachbart zu einem Zahnkranz (132) des Ausgangsrades (13) über dessen überwiegenden, hauptbehälterfernen Umfangsbereich erstreckt, einstückig an einen Teil des Hauptbehälters (21) angeformt ist.

Die Erfindung bezieht sich weiter auf einen entsprechenden Ölbehälter (20).

## Beschreibung

Die Erfindung bezieht sich auf eine Getriebeeinheit für ein Kraftfahrzeug, umfassend
- ein Eingangsrad, ein mit dem Eingangsrad kämmendes Zwischenrad und ein mit dem Zwischenrad kämmendes Ausgangsrad sowie
- einen Ölbehälter zur Bevorratung und Verteilung von Öl, der einen im Betriebszustand wenigstens bereichsweise oberhalb des Eingangsrades angeordneten Hauptbehälter aufweist.

Die Erfindung bezieht sich weiter auf einen Ölbehälter zur Bevorratung und Verteilung von Öl in einer ein Eingangsrad, ein mit dem Eingangsrad kämmendes Zwischenrad und ein mit dem Zwischenrad kämmendes Ausgangsrad aufweisenden Getriebeeinheit eines Kraftfahrzeugs, der einen im Montageendzustand wenigstens oberhalb des Eingangsrades angeordneten Hauptbehälter aufweist.

Derartige Getriebeeinheiten und Ölbehälter sind bekannt aus der DE 11 2010 001 550 T5.

Die Antriebseinheiten elektrifizierter Kraftfahrzeuge sind üblicherweise in eine Motoreinheit und eine dieser benachbarte Getriebeeinheit unterteilt. Beide Einheiten unterscheiden sich stark in ihrem Management von Öl, welches insbesondere zur Kühlung und Schmierung benötigt wird. Während in der Motoreinheit vorwiegend der Kühlungsaspekt eine übergeordnete Rolle spielt, ist in der Getriebeeinheit der Schmierungsaspekt wesentlich. Die Kühlung der Motoreinheit erfolgt regelmäßig dadurch, dass die hohl ausgebildete Rotorwelle der dortigen elektrischen Maschine mit Kühlöl durchströmt wird. In der Getriebeeinheit plantschen hingegen die dortigen Zahnräder regelmäßig in einem Ölsumpf, der sich aufgrund der Verschmutzungsgefahr des Luftspaltes zwischen Rotor und Stator der elektrischen Maschine typischerweise nicht bis die Motoreinheit hinein erstreckt. Trotz dieser unterschiedlichen Anforderungen ist ein gemeinsames, integriertes Ölmanagement wünschenswert. Hierfür wurden komplex geformte Ölbehälter mit einer Vielzahl von Ausgängen entwickelt. Größe und Position der Ausgänge sind entsprechend einer Hierarchie der jeweils angeschlossenen Kühl- bzw. Schmierzielbereiche gewählt. Aus der eingangs genannten, gattungsbildenden Druckschrift ist eine Getriebeeinheit bekannt, deren Eingangsrad auf einer eine Trennwand zwischen Motoreinheit und Getriebeeinheit durchsetzenden Verlängerung der Rotorwelle fixiert ist. Dieses Eingangsrad kämmt mit einer ersten Stufe eines als Stufenrad ausgebildeten Zwischenrades, das auf einer Zwischenwelle fixiert ist. Mit der zweiten Stufe dieses Zwischenrades kämmt ein Achsantriebsrad, welches als Ausgangsrad dient. Ein komplex geformter Ölbehälter ist mit seinem Hauptbehälter oberhalb des Eingangsrades angeordnet und weist einen tiefliegenden Ausgang auf, über den Öl zur Kühlung in die hohle Rotorwelle geleitet wird. Andere Ausgänge versorgen andere Kühl- und Schmierzielbereiche. Zur Befüllung des Behälters sieht die genannte Druckschrift zwei Wege vor. Einerseits weist der Ölbehälter an seinen Hauptbehälter anschließend einen Einfüllbereich auf, der sich bis oberhalb des Ausgangsrades erstreckt und eine Einfüllöffnung aufweist, die so angeordnet ist, dass Öl aus dem Ölsumpf, in welchem das Ausgangsrad plantscht, bei Betrieb mittels des Ausgangsrades als sogenanntes Wurföl durch die Einfüllöffnung in den Einfüllbereich und von diesem in den Hauptbehälter gefördert wird. Andererseits ist der Ölbehälter über eine Ölleitung mit einer Ölpumpe verbunden, die unabhängig von der aktuellen Wurfölförderung Öl aus einem Reservoir, insbesondere dem Ölsumpf, in den Ölbehälter zu pumpen vermag.

Dieser Ansatz hat sich im Wesentlichen bewährt. Defizite existieren jedoch im Hinblick auf die Fördereffizienz insbesondere der Wurfölförderung.

Es ist die Aufgabe der vorliegenden Erfindung eine gattungsgemäße Getriebeeinheit derart weiterzubilden, dass die Wurfölförderung effizienter gestaltet wird. Es ist eine weitere Aufgabe der vorliegenden Erfindung einen hierfür geeigneten, modifizierten Ölbehälter zur Verfügung zu stellen.

Die oben erstgenannte Aufgabe wird in Verbindung mit den Merkmalen des Oberbegriffs von Anspruch 1 dadurch gelöst, dass ein ringscheibenförmiges Abschirmelement, dessen Ringscheibe sich parallel und axial benachbart zum Zahnkranz des Ausgangsrades über dessen überwiegenden, hauptbehälterfernen Umfangsbereich erstreckt, einstückig an einen Teil des Hauptbehälter angeformt ist.

Die oben zweitgenannte Aufgabe wird in Verbindung mit den Merkmalen des Oberbegriffs von Anspruch 13 dadurch gelöst, dass ein ringscheibenförmiges Abschirmelement einstückig an den Hauptbehälter angeformt ist und sich seine Ringscheibe im Montageendzustand parallel und benachbart zum Zahnkranz des Ausgangsrades über dessen überwiegenden, hauptbehälterfernen Umfangsbereich erstreckt.

Bevorzugte Ausführungsformen der Erfindung sind Gegenstand der abhängigen Patentansprüche.

Die Grundidee der Erfindung besteht darin, den Plantschbereich des Ausgangsrades in axialer Richtung eng zu begrenzen, um Plantschverluste zu reduzieren. Tauchen die Zähne des rotierenden Ausgangsrades nämlich in einem axial im Wesentlichen unbegrenzten Bereich in den Ölsumpf ein bzw. wieder aus diesem auf, kann dadurch verdrängtes Öl seitlich, d. h. in axialer Richtung, ausweichen. Daher entsteht eine lokale Pegelabsenkung des Ölsumpfs im Ein- bzw. Auftauchbereich. Dies führt zu einer verminderten Förderung von Wurföl in den Ölbehälter. Ist der Ein- bzw. Auftauchbereich jedoch durch eine Wandung in axialer Richtung eng begrenzt, kann im Gegenteil sogar eine lokale Pegelerhöhung und jedenfalls eine Effizienzsteigerung bei der Wurfölförderung erreicht werden.

Auf der der Motoreinheit abgewandten Außenseite der Getriebeeinheit kann die erwünschte Axialbegrenzung durch eine eng anliegende Führung der Gehäuseaußenwand der Getriebeeinheit geschaffen werden. Auf der gegenüberliegenden, der Motoreinheit zugewandten Seite des Ausgangsrades ist dies jedoch deutlich schwieriger. Hier nämlich ist die Trennwand zwischen Motoreinheit und Getriebeeinheit die nächstliegenden Wand, die für diese Aufgabe in Frage käme. Aufgrund der Abfolge der Montageschritte beim Aufbau einer solchen Antriebseinheit ist diese Trennwand jedoch häufig vergleichsweise weit von dem Ausgangsrad beabstandet. Insbesondere in dem bevorzugten Fall, dass das Ausgangsrad als der mit einem äußeren Zahnkranz bewehrte Differentialkorb eines Ausgleichsgetriebes gestaltet ist, ist der relevante Abstand zwischen Trennwand und Ausgangsradzahnkranz besonders groß. Die Erfindung sieht nun vor, in diesem Freiraum ein zusätzliches Abschirmelement zu positionieren, welches die oben beschriebene axiale Begrenzungswirkung hat, ohne dass irgendwelche konstruktiven Änderungen am Gehäuse oder gar eine Veränderung des bewährten Montageverfahrens erforderlich würden. Auch ist kein zusätzliches Bauteil erforderlich. Vielmehr ist das erfindungsgemäße Abschirmelement lediglich eine Erweiterung eines ohnehin vorhandenen Bauteils, nämlich des Ölbehälters. Das Montageverfahren kann also ohne irgendeine Änderung gegenüber Aufbauten mit bekanntem Ölbehälter durchgeführt werden.

Der hier verwendete Begriff der Ringscheibe ist nicht auf exakt kreisringförmige Scheiben beschränkt. Gerade in Fällen, in denen das Abschirmelement mehrere Wellen bzw. Räder, insbesondere das Ausgangsrad und das Zwischenrad, überspannen soll, ergibt sich eine Ringscheibe von nicht-runder Form. Gleichwohl ist bevorzugt vorgesehen, dass die Ringscheibe einen hauptbehälterfernen, offen kreisringförmigen Abschnitt aufweist. Dieser offen kreisringförmige Abschnitt ist an die Dimensionen des Ausgangsrades in dessen Plantschbereich angepasst. An die Abschnittsenden des offen kreisringförmigen Abschnitts kann sich ein weiterer, von der Kreisringform abweichender, insbesondere winkliger Abschnitt anschließen.

Typischerweise besteht das Ausgangsrad aus einem Radkörper und einem diesen radial umlaufenden Zahnkranz. Speziell kann der Radkörper als Differentialkorb eines Ausgleichsgetriebes ausgebildet sein. Für die Dimensionierung der Ringscheibe des erfindungsgemäßen Abschirmelementes ist vorgesehen, dass seine lichte Weite dem Durchmesser besagten Radkörpers und vorzugsweise ihre Breite der Höhe des Zahnkranzes entspricht. Im bevorzugten Fall eines abschnittsweise offen kreisringscheibenförmigen Abschirmelementes entspricht bevorzugt die lichte Weite diese offen kreisringscheibenförmigen Abschnitts dem Durchmessers des Radkörpers des Ausgangsrades. Angestrebt wird, dass die Dimensionen der Ringscheibe auf ihr funktional zur Erzielung des oben erläuterten Effizienzsteigerungseffektes erforderliches Minimum reduziert werden. Die mit der Einführung des erfindungsgemäßen Abschirmelementes verbundenen, zusätzlichen Material- und Bauraumkosten werden dadurch ebenfalls minimiert.

Bevorzugt weist das Abschirmelement auf seiner dem Ausgangsrad abgewandten Seite eine Versteifungsrippenstruktur auf. Die andere, d. h. die dem Ausgangsrad zugewandte Seite des Abschirmelementes, ist hingegen bevorzugt eben ausgebildet. Die ebene Ausbildung vermeidet Verwirbelungen im Tauchbereich des Ausgangsrades, die der Fördereffizienz abträglich sein könnten. Die Versteifungsrippenstruktur hingegen erlaubt eine besonders dünne, materialsparende Ausgestaltung des Abschirmelementes ohne Einbußen bei der erforderlichen, strukturellen Stabilität in dem rauen Umfeld im Inneren der Getriebeeinheit.

Zur weiteren Stabilisierung kann vorgesehen sein, dass an dem Abschirmelement eine oder mehrere radial abstehende Fixierungslaschen angeformt sind, die an korrespondierenden Fixierungsstrukturen des Gehäuses der Getriebeeinheit fixiert sind. Insbesondere können diese Fixierungslaschen und korrespondierenden Fixierungsstrukturen als zueinander passende Rastelemente ausgebildet sein. Insgesamt weist die bevorzugte Gestalt des Abschirmelementes bzw. das sich aus eigentlichem Ölbehälter und Abschirmelement zusammensetzende Bauteil eine sehr komplexe, filigrane Struktur auf. Derartige Strukturen lassen sich zuverlässig und kostengünstig, z.B. im Kunststoffspritzgussverfahren oder durch Schäumen, herstellen. Dies insbesondere, wenn der Ölbehälter als solcher, insbesondere sein Hauptbehälter, aus zwei Halbschalen aufgebaut ist. Jede dieser Halbschalen lässt sich als eigenes Element auf einfache Weise im Kunststoffspritzgussverfahren herstellen. Das erfindungsgemäße Abschirmelement kann dann als Anhang einer dieser Halbschalen einstückig mit dieser ausgebildet sein.

Eine Weiterbildung des erfindungsgemäßen Abschirmelementes sieht vor, dass dieses zwei auf seiner dem Ausgangsrad abgewandten Seite oberhalb dessen Radkörpers einander gegenüberliegend ansetzende, nach radial innen in die lichte Weite seiner Ringscheibe hineinragende und gleichsinnig mit deren hauptbehälterfernem Abschnitt gekrümmte Ölleitelemente aufweist. Diese können insbesondere an den Abschnittsenden des offen kreisringscheibenförmigen Abschnitts der Ringscheibe angeordnet sein. Die Ölleitelemente bilden Abtropfkanten, die axial benachbart zum Zahnkranz des Ausgangsrades trichterartig oberhalb der Ausgangsrad-Welle bzw. des Ausgangsrad-Radkörpers positioniert sind. Diese Abtropfkanten sind insbesondere von Bedeutung, wenn es sich bei dem Radkörper, wie bevorzugt vorgesehen, um den Differentialkorb eines Ausgleichsgetriebes handelt. Dann nämlich kann Öl, das an der Einfüllöffnung des Ölbehälters vorbei gefördert wurde und/oder aus einer speziellen Öffnung des Ölbehälters stammt, mittels dieser Abtropfkanten gesammelt und gezielt durch die Öffnungen des Differentialkorbs in die Verzahnungsbereiche von dessen Kegelrädern eingeleitet werden. Mit anderen Worten erlauben solche Abtropfkanten eine zusätzliche, gezielte Beölung des Ausgleichgetriebes.

Die Erfindung wurde oben im Wesentlichen im Kontext einer Getriebeeinheit für ein Kraftfahrzeug beschrieben. Allerdings stellt der Ölbehälter selbst ein eigenständiges, merkantiles Produkt dar, welches insbesondere geeignet ist, zur erfindungsgemäßen Aufrüstung herkömmlicher Getriebeeinheiten, d. h. Getriebeeinheiten mit herkömmlichem Ölbehälter, eingesetzt zu werden. Daher ist das vorliegende Schutzbegehren auch auf einen separaten Ölbehälter gerichtet, dessen Merkmale freilich nur in Bezug auf seine Montageendlage in einer erfindungsgemäßen Getriebeeinheit definierbar sind.

Bei einer vorteilhaften Weiterbildung des erfindungsgemäßen Ölbehälters ist vorgesehen, dass ein zum Anschluss einer Ölpumpe geeignetes und in den Hauptbehälter mündendes Ölleitrohr einstückig an Hauptbehälter angeformt ist. Alternativ kann vorgesehen sein, dass ein zum Anschluss einer Ölpumpe geeignetes und in den Hauptbehälter mündendes Ölleitrohr als separates Bauteil an dem Hauptbehälter fixiert ist. In jedem Fall kann das Ölleitrohr bereits vor Montage des Ölbehälters in der Getriebeeinheit Bestandteil des komplexen Ölbehälter-Bauteils sein. Ein solch komplexes Bauteil kann unabhängig davon eingesetzt werden, ob die letztendlich zu montierende Getriebeeinheit eine Ölpumpe enthält oder nicht. Falls ja, erfolgt deren Anschluss an das Ölleitrohr; falls nein, unterbleibt ein solcher Anschluss. Dies stellt einen deutlichen Vorteil im Hinblick auf die grundsätzlich wünschenswerte Einschränkung der Teilevielfalt dar und hilft auf diese Weise Kosten einzusparen.

Weitere Merkmale und Vorteile der Erfindung ergeben sich aus der nachfolgenden, speziellen Beschreibung und den Zeichnungen.

### Es zeigen:

- Figur 1: eine Schnittdarstellung durch eine erfindungsgemäße Getriebeeinheit,
- Figur 2: den Ölbehälter der Getriebeeinheit in einer ersten perspektivischen Darstellung,
- Figur 3: den Ölbehälter von Figur 2 in einer zweiten perspektivischen Darstellung,
- Figur 4: eine Seitenansicht des Ölbehälters der Figuren 2 und 3,
- Figur 5: eine ausschnittsweise Schnittdarstellung durch den unteren Bereich der Getriebeeinheit von Figur 1 im Vertikalschnitt parallel zu den Wellen der Getriebeeinheit,
- Figur 6: den Ausschnitt von Figur 5 in Ansicht senkrecht zur Schnittdarstellung in Figur 5 sowie
- Figur 7: eine teilweise geschnittene, perspektivische Ansicht der Getriebeeinheit von Figur 1.

Gleiche Bezugszeichen in den Figuren weisen auf gleiche oder analoge Elemente hin.

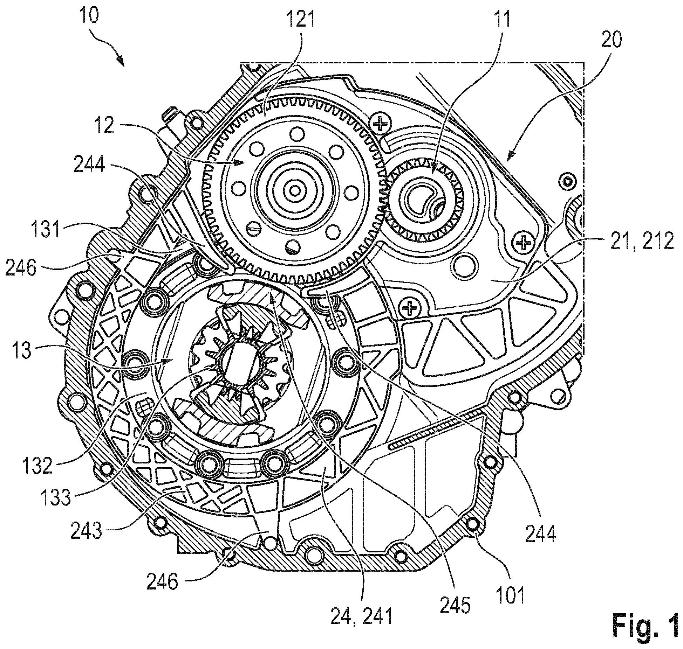

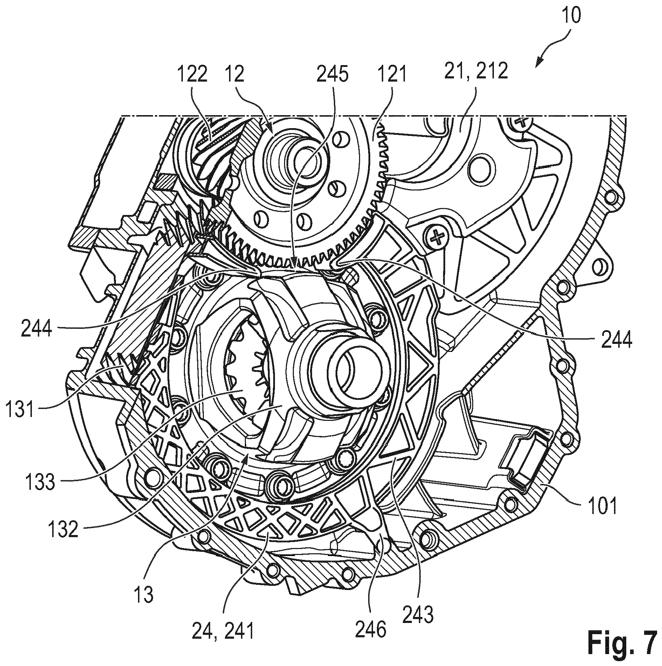

Figur 1 zeigt eine Schnittdarstellung einer erfindungsgemäßen Getriebeeinheit 10, von der Figur 7 eine teilweise geschnittene, perspektivisches Ansicht darstellt. Die Getriebeeinheit 10 ist Bestandteil einer größeren Antriebseinheit, die neben der dargestellten Getriebeeinheit 10 auch eine nicht dargestellte Motoreinheit enthält, welche insbesondere eine elektrische Maschine aufweist. Im Montageendzustand ist die Motoreinheit in der Blickrichtung von Figur 1 vor der dargestellten Getriebeeinheit angeordnet. Insbesondere stellt das in Figur 1 erkennbare Eingangsrad 11 ein auf der Rotorwelle der elektrischen Maschine fixiertes Zahnrad dar. Das Eingangsrad 11 kämmt mit dem größeren Zahnkranz 121 eines Zwischenrades 12, welches auf einer Zwischenwelle der Getriebeeinheit 10 fixiert ist und bei Betrieb mit dieser rotiert. Ein axial zum größeren Zahnkranz 121 versetzter, kleinerer Zahnkranz 122, der insbesondere unmittelbar auf der Zwischenwelle sitzen bzw. in diese eingearbeitet sein kann, ist in der angeschnittenen Darstellung von Figur 7 erkennbar. Mit diesem kleineren Zahnkranz 122 kämmt der Zahnkranz 131 des Ausgangsrades 13, dessen Radkörper 132, wie insbesondere in Figur 7 gut erkennbar, als Differentialkorb eines Ausgleichsgetriebes ausgebildet ist. Im Inneren des Differentialkorbes bzw. Radkörpers 132 ist ein Satz Kegelräder 133 in dem Fachmann grundsätzlich bekannter Weise angeordnet und mit nicht näher im Detail dargestellten Achsflanschwellen verbunden.

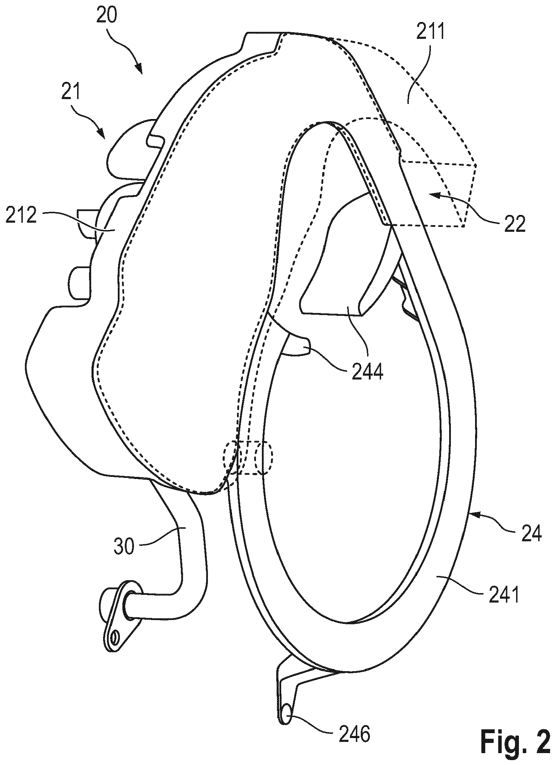

Weiter umfasst die Getriebeeinheit 10 einen Ölbehälter 20, der in den Figuren 2, 3 und 4 im Detail dargestellt ist. Bei der dargestellten Ausführungsform ist der Ölbehälter 20 , dessen Hauptbehälter 21 aus zwei jeweils im Kunststoffspritzgussverfahren ausgebildeten Halbschalen 211, 212 aufgebaut ist, wie dies insbesondere in Figur 2 gut ersichtlich ist. Das zwischen den beiden Halbschalen 211, 212 befindliche Lumen des Hauptbehälters 21 dient der Bevorratung von Öl zu Schmier- und Kühlzwecken. An mehreren, im Kontext der vorliegenden Erfindung jedoch nicht weiter relevanten Stellen ist der Hauptbehälter 21 mit Öffnungen versehen, aus welchen Öl über ein verzweigtes Ölleitsystem zu verschiedenen Kühl- bzw. Schmierzielorten geleitet werden kann.

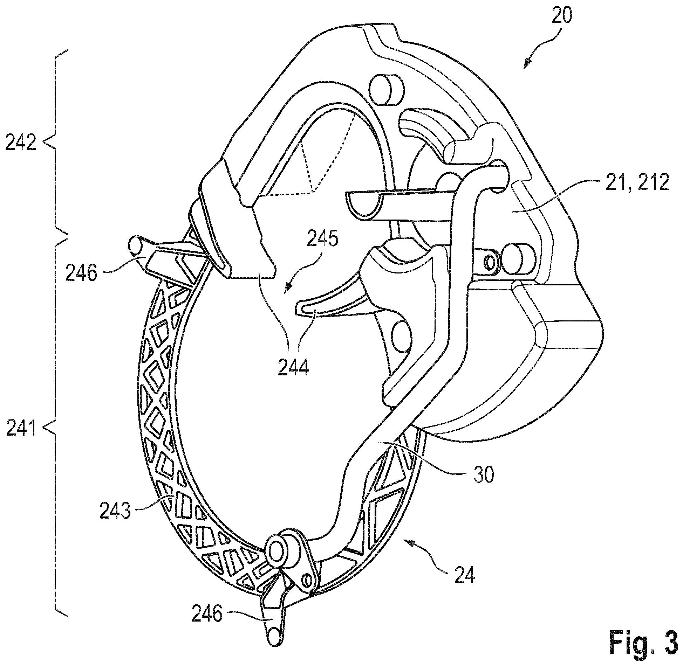

Die in Figur 1 hintere, verdeckte Halbschale 211, die insbesondere in Figur 2 bezüglich ihrer Formgebung gut erkennbar ist, weist einen Einlassbereich 22 auf, der zum Auffangen von Öl dient, welches bei Betrieb mittels des Zahnkranzes 131 des Ausgangsrades 13 aus einem nicht dargestellten Ölsumpf am Boden der Getriebeeinheit 10 nach oben gefördert und in den Hauptbehälter 21 geworfen wird. Bei der dargestellten Ausführungsform weist der Hauptbehälter 21 noch eine weitere Befüllmöglichkeit auf, nämlich das insbesondere in Figur 3 gut erkennbare Ölleitrohr 30, welches bei der dargestellten Ausführungsform als gesondertes Kunststoff-Spritzgussbauteil an die in Figur 1 vordere und insbesondere in Figur 3 gut erkennbare Halbschale 212 angeclipst ist. Denkbar ist auch eine mit der Halbschale 212 einstückige Ausgestaltung des Ölleitrohrs 30.

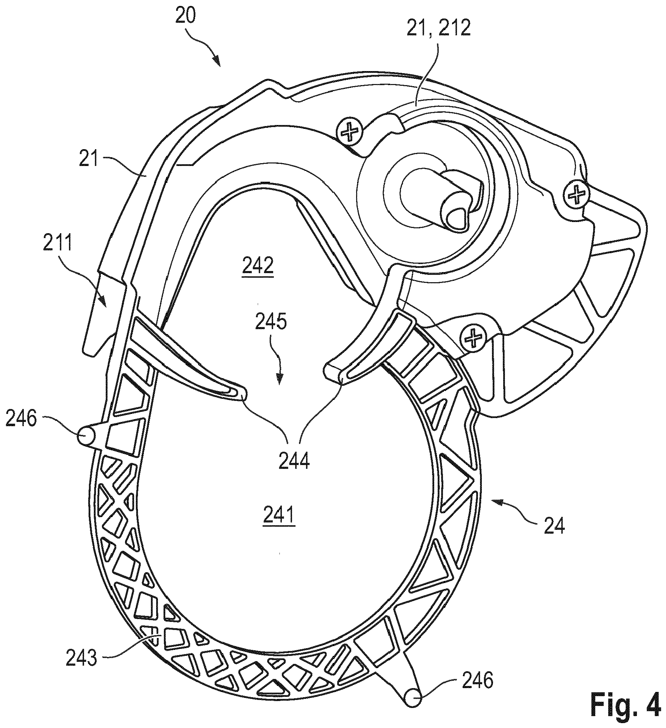

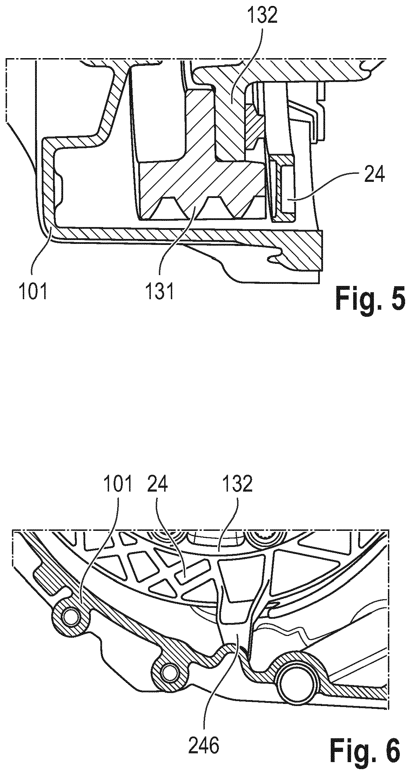

Im Zentrum der vorliegenden Erfindung steht das einstückig an den Ölbehälter 20, insbesondere an dessen in Figur 1 vorderer Halbschale 212 angeformte Abschirmelement 24. Es hat eine grundsätzlich ringscheibenförmige Gestalt. Wie insbesondere in der Darstellung von Figur 4 gut erkennbar, umfasst diese Ringscheibe einen unteren, offen kreisringscheibenförmigen Abschnitt 241, der oben in einen winkligen, im Wesentlichen dreieckigen Bereich 242 übergeht. Der offen kreisringscheibenförmige Abschnitt 241 ist koaxial zum Ausgangsrad 13 orientiert. Sein Innendurchmesser entspricht in etwa dem Außendurchmesser des Radkörpers 132 des Ausgangsrades 13. Seine Breite, d. h. die Differenz zwischen seinem Innen- und Außendurchmesser, entspricht im Wesentlichen der Höhe des Zahnkranzes 131 des Ausgangsrades 13. Wie insbesondere in Figur 5 gut erkennbar, ist der offen kreisringscheibenförmige Abschnitt 241 des Abschirmelementes 24 eng benachbart zum Zahnkranz 131 des Ausgangsrades 13 positioniert. Hierdurch wird ein Ausweichen von Öl verhindert, wenn die Zahnung des Zahnkranzes 131 bei Betrieb in den Ölsumpf eintaucht. Entsprechend wird mehr Öl aus dem Ölsumpf mitgenommen, wenn der Zahnkranz 131 wieder aus dem Ölsumpf auftaucht. Es resultiert eine effizientere Ölförderung von Wurföl aus dem Ölsumpf in den Hauptbehälter 21.

Wie insbesondere aus dem Vergleich der Figuren 2 und 3 ersichtlich, ist die dem Ausgangsrad 13, insbesondere des Zahnkranz 131 zugewandte Fläche des offen kreisringscheibenförmigen Abschnitts 241 des Abschirmelementes 24 eben ausgebildet, wohingegen ihre abgewandte Seite eine Versteifungsrippenstruktur 243 aufweist. Auf diese Weise kann die Ringscheibe bzw. das Abschirmelement 24 insgesamt recht dünn ausgebildet sein, ohne jedoch die bei Betrieb erforderliche Steifigkeit einzubüßen. Wie insbesondere in den Figuren 1, 6 und 7 gut erkennbar, verfügt das Abschirmelement 24 zusätzlich über nach radial außen ragende Fixierungslaschen 246, die an korrespondierenden Fixierungsstrukturen eines Gehäuses 101 der Getriebeeinheit 10 fixiert sind. Bei der dargestellten, bevorzugten Ausführungsform sind besagte Fixierungslaschen 246 und Fixierungsstrukturen als korrespondierende Rastelemente ausgebildet, was die Montage des Ölbehälters 20 und insbesondere seines Abschirmelementes 24 deutlich erleichtert und zugleich für eine hohe Positionstreue und Steifigkeit sorgt.

Der obere, winklige Abschnitt der Ringscheibe des Abschirmelementes 24 umgreift den kleineren Zahnkranz 122 des Zwischenrades 12. Auch er dient dazu, seitliche Verluste von Wurföl zu verhindern und dadurch die Fördereffizienz in den Ölbehälter 20 zu steigern.

Wie insbesondere in Figur 4 gut erkennbar, sind im Übergangsbereich zwischen dem offen kreisringscheibenförmigen Abschnitt 241 und dem winkligen Abschnitt 242 nach radial innen ragende Ölleitelemente 244 vorgesehen. Diese schmiegen sich, wie insbesondere in den Figuren 1 und 7 gut erkennbar, radial außen an den größeren Zahnkranz 121 des Zwischenrades 12 an. Zwischen ihren freien Enden besteht eine Lücke 245, die exakt mittig oberhalb des den Radkörper 132 des Ausgangsrades 13 bildenden Differentialkorbes positioniert ist. Vom Ausgangsrad 13 nach oben gefördertes Wurföl, welches nicht in den Ölbehälter 20 gelangt, sowie ggf. aus einer Öffnung des Hauptbehälter 21 zusätzlich ausströmendes Öl wird von besagten Ölleitelementen 244 gesammelt und zu besagter Lücke 245 geleitet. Von dort tropft es durch die Öffnungen des Differentialkorbes in dessen Inneres, wo es die dort angeordneten Kegelräder 133 beölt.

Wie insbesondere in Figur 6 erkennbar ist der untere Bereich des Gehäuses 101 derart geformt, dass er gemeinsam mit dem Zahnkranz 131 des Ausgangsrades 13 einen winkligen, sich in Drehrichtung verjüngenden Raum bildet. Dieser Raum liegt im Betriebsfall im Bereich des Ölsumpfes. Durch die Verjüngung ergibt sich bei Betrieb, d. h. bei Rotation des Ausgangsrades 13, aufgrund hydrodynamischer Zusammenhänge hier ein Unterdruck, der besagten winkligen Raum zu einem regelrechten Ansaugraum für Öl macht. Dies führt zu einem lokalen Pegelanstieg, der dadurch noch verstärkt wird, dass ein seitliches Ausweichen des angesaugten Öls durch das Abschirmelement 24 behindert wird. Dies führt zu einer weiteren Steigerung der Wurföl-Fördereffizienz.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten an die Hand gegeben.

### Bezugszeichenliste

- 10: Getriebeeinheit
- 101: Gehäuse von 10
- 11: Eingangsrad
- 12: Zwischenrad
- 121: größerer Zahnkranz von 12
- 122: kleinerer Zahnkranz von 12
- 13: Ausgangsrad
- 131: Zahnkranz von 13
- 132: Radkörper von 13 / Differentialkorb
- 133: Kegelräder
- 20: Ölbehälter
- 21: Hauptbehälter von 20
- 211: Halbschale von 20
- 212: Halbschale von 20
- 22: Einlassbereich
- 24: Abschirmelement
- 241: offen kreisringscheibenförmiger Abschnitt von 24
- 242: winkliger Abschnitt von 24
- 243: Versteifungsrippenstruktur
- 244: Ölleitelement
- 245: Lücke
- 246: Fixierungselement
- 30: Ölleitrohr

## Patentansprüche

1. Getriebeeinheit (10) für ein Kraftfahrzeug, umfassend
- ein Eingangsrad (11), ein mit dem Eingangsrad (11) kämmendes Zwischenrad (12) und ein mit dem Zwischenrad (12) kämmendes Ausgangsrad (13) sowie
- einen Ölbehälter (20) zur Bevorratung und Verteilung von Öl, der einen im Betriebszustand wenigstens bereichsweise oberhalb des Eingangsrades (11) angeordneten Hauptbehälter (21) aufweist,
**dadurch gekennzeichnet,**
**dass** ein ringscheibenförmiges Abschirmelement (24), dessen Ringscheibe sich parallel und axial benachbart zu einem Zahnkranz (132) des Ausgangsrades (13) über dessen überwiegenden, hauptbehälterfernen Umfangsbereich erstreckt, einstückig an einen Teil des Hauptbehälters (21) angeformt ist.

2. Getriebeeinheit (10) nach Anspruch 1,
**dadurch gekennzeichnet,**
**dass** die Ringscheibe einen hauptbehälterfernen, offen kreisringförmigen Abschnitt (241) aufweist.

3. Getriebeeinheit (10) nach einem der vorangehenden Ansprüche,
**dadurch gekennzeichnet,**
**dass** das Ausgangsrad (13) einen Radkörper (131) und einen diesen radial außen umlaufenden Zahnkranz (132) aufweist.

4. Getriebeeinheit (10) nach Anspruch 3,
**dadurch gekennzeichnet,**
**dass** die lichte Weite der Ringscheibe dem Durchmesser des Radkörpers (131) und ihre Breite der Höhe des Zahnkranzes (132) entspricht.

5. Getriebeeinheit (10) nach den Ansprüchen 3 und 4,
**dadurch gekennzeichnet,**
**dass** die lichte Weite des offen kreisringscheibenförmigen Abschnitts (241) der Ringscheibe dem Durchmesser des Radkörpers (131) des Ausgangsrades (13) entspricht.

6. Getriebeeinheit (10) nach einem der Ansprüche 3 bis 5,
**dadurch gekennzeichnet,**
**dass** der Radkörper (131) als ein Differentialkorb eines Ausgleichsgetriebes ausgebildet ist.

7. Getriebeeinheit (10) nach einem der vorangehenden Ansprüche,
**dadurch gekennzeichnet,**
**dass** das Abschirmelement (24) auf seiner dem Ausgangsrad (13) abgewandten Seite eine Versteifungsrippenstruktur (243) aufweist.

8. Getriebeeinheit (10) nach einem der vorangehenden Ansprüche,
**dadurch gekennzeichnet,**
**dass** das Abschirmelement (24) auf seiner dem Ausgangsrad (13) zugewandten Seite eben ausgebildet ist.

9. Getriebeeinheit (10) nach einem der vorangehenden Ansprüche,
**dadurch gekennzeichnet,**
**dass** an dem Abschirmelement (24) eine oder mehrere radial abstehende Fixierungslaschen (246) angeformt sind, die an korrespondierenden Fixierungsstrukturen eines Gehäuses (101) der Getriebeeinheit (10) fixiert sind.

10. Getriebeeinheit (10) nach Anspruch 9,
**dadurch gekennzeichnet,**
**dass** die Fixierungslaschen (246) und die korrespondierenden Fixierungsstrukturen als Rastelemente ausgebildet sind.

11. Getriebeeinheit (10) nach einem der vorangehenden Ansprüche,
**dadurch gekennzeichnet,**
**dass** das Abschirmelement (24) zwei auf seiner dem Ausgangsrad (13) abgewandten Seite oberhalb dessen Radkörpers (131) einander gegenüberliegend ansetzende, nach radial innen in die lichte Weite seiner Ringscheibe hinein ragende und gleichsinnig mit deren hauptbehälterfernem Abschnitt gekrümmte Ölleitelemente aufweist.

12. Getriebeeinheit (10) nach einem der vorangehenden Ansprüche,
**dadurch gekennzeichnet,**
**dass** der Hauptbehälter (21) einen oberhalb des Ausgangsrades (13) angeordneten Einfüllbereich (22) mit einer Einfüllöffnung aufweist, die so angeordnet ist, dass Öl aus einem Ölsumpf, in dem das Ausgangsrad (13) plantscht, bei Betrieb mittels des Ausgangsrades (13) durch die Einfüllöffnung in den Einfüllbereich (22) gefördert wird.

13. Ölbehälter (20) zur Bevorratung und Verteilung von Öl in einer ein Eingangsrad (11), ein mit dem Eingangsrad (11) kämmendes Zwischenrad (12) und ein mit dem Zwischenrad (12) kämmendes Ausgangsrad (13) aufweisenden Getriebeeinheit (10) eines Kraftfahrzeugs,
der einen im Montageendzustand wenigstens bereichsweise oberhalb des Eingangsrades (11) angeordneten Hauptbehälter (21) aufweist,
**dadurch gekennzeichnet,**
**dass** ein ringscheibenförmiges Abschirmelement (24) einstückig an einen Teil des Hauptbehälters (21) angeformt ist und sich seine Ringscheibe im Montageendzustand parallel und axial benachbart zu einem Zahnkranz (132) des Ausgangsrades (13) über dessen überwiegenden, hauptbehälterfernen Umfangsbereich erstreckt.

14. Ölbehälter (20) nach Anspruch 13,
**dadurch gekennzeichnet,**
**dass** ein zum Anschluss einer Ölpumpe geeignetes und in den Hauptbehälter (21) mündendes Ölleitrohr (30) einstückig an dem Hauptbehälter (21) angeformt ist.

15. Ölbehälter (20) nach Anspruch 13,
**dadurch gekennzeichnet,**
**dass** ein zum Anschluss einer Ölpumpe geeignetes und in den Hauptbehälter (21) mündendes Ölleitrohr (30) als separates Bauteil an dem Hauptbehälter (21) fixiert ist.
